# EUROPÄISCHE PATENTSCHRIFT

(11) **EP 2 879 908 B1**
(45) Veröffentlichungstag und Bekanntmachung des Hinweises auf die Patenterteilung: **06.04.2016**
(21) Anmeldenummer: 13740031.3
(22) Anmeldetag: 25.07.2013
(51) Int. Cl.: B60N 2/44

(54) **ENTRIEGELUNGSEINHEIT FÜR EINEN FAHRZEUGSITZ UND FAHRZEUGSITZ**
UNLOCKING UNIT FOR A VEHICLE SEAT, AND VEHICLE SEAT
ENSEMBLE DE DÉVERROUILLAGE DESTINÉ À UN SIÈGE DE VÉHICULE, ET SIÈGE DE VÉHICULE

(30) Priorität: 31.07.2012 DE 102012015288
(43) Veröffentlichungstag der Anmeldung: 10.06.2015
(73) Patentinhaber: Johnson Controls GmbH, 51399 Burscheid (DE)
(72) Erfinder: KUZMA, Martin, 91108 Trencin (SK); ROVNY, Maros, 91104 Trencin (SK)
(74) Vertreter: Liedhegener, Ralf
(86) Internationale Anmeldenummer: PCT/EP2013/065721
(87) Internationale Veröffentlichungsnummer: WO 2014/019930

(56) Entgegenhaltungen:
- DE-A1- 10 163 611
- DE-A1-102005 006 565
- DE-A1-102006 017 491

## Beschreibung

Die Erfindung betrifft eine Entriegelungseinheit für einen Fahrzeugsitz mit den Merkmalen des Oberbegriffs des Anspruchs 1. Die Erfindung betrifft auch einen Fahrzeugsitz mit den Merkmalen des Anspruchs 12.

### Stand der Technik

Aus der DE 10 2010 052 273 A1 sind eine gattungsgemäße Entriegelungseinheit sowie ein gattungsgemäßer Fahrzeugsitz bekannt. Der Fahrzeugsitz umfasst dabei eine schwenkbare Rückenlehne, welche mittels zweier Verriegelungsvorrichtungen mit der Sitzstruktur des Fahrzeugsitzes verriegelbar ist. Durch Entriegeln der besagten Verriegelungsvorrichtungen ist die Rückenlehne um eine waagerechte Schwenkachse schwenkbar. Dabei sind beide Verriegelungsvorrichtungen gleichzeitig entriegelbar.

Auch aus der DE 10 2006 015 922 B4 ist ein gattungsgemäßer Fahrzeugsitz bekannt. Der Fahrzeugsitz ist dabei mittels zweier Verriegelungsvorrichtungen mit einer Sitzschiene verriegelbar. Durch Entriegeln der beiden besagten Verriegelungsvorrichtungen ist der Fahrzeugsitz von der Sitzschiene lösbar und aus dem Fahrzeug entnehmbar. Beide Verriegelungsvorrichtungen sind gleichzeitig entriegelbar.

Nach Wiedereinsetzen des Fahrzeugsitzes in das Fahrzeug ist es wichtig, dass beide Verriegelungsvorrichtungen verriegeln um den Fahrzeugsitz sicher zu halten. Eine Kontrolle des Verriegelungszustandes der Verriegelungsvorrichtungen ist visuell möglich. Das heißt, ein Benutzer kann jede einzelne Verriegelungsvorrichtung ansehen und erkennen, ob diese verriegelt oder entriegelt ist.

Aus der DE 102 30 637 A1 ist ein Fahrzeugsitz mit einer Verriegelungsvorrichtung zur Verriegelung einer Rückenlehne des Fahrzeugsitzes mit einer Fahrzeugkarosserie bekannt. Die Verriegelungsvorrichtung umfasst ein optisches Anzeigeelement, welches anzeigt, ob die Verriegelungsvorrichtung verriegelt oder entriegelt ist.

Ferner sind beispielhaft die Patentanmeldungen DE 101 63 611 A1 (dem Oberbegriff entsprechend) und DE 10 2005 006 565 A1 genannt, die jeweils Entriegelungsvorrichtungen beziehungsweise Verriegelungsvorrichtungen beschreiben, die über Betätigungshebel, Betätigungsstangen oder Bowdenzuganbindungen Bewegungen der Entriegelungsvorrichtungen beziehungsweise Verriegelungsvorrichtungen auf angeschlossene Mechanismen übertragen.

### Aufgabe

Der Erfindung liegt die Aufgabe zu Grunde, eine Entriegelungseinheit der eingangs genannten Art zu verbessern, insbesondere eine Anzeige für den Verriegelungszustand beider Verriegelungsvorrichtungen zu schaffen, welche anzeigt, ob beide Verriegelungsvorrichtungen verriegelt sind.

### Lösung

Diese Aufgabe wird erfindungsgemäß durch eine Entriegelungseinheit für einen Fahrzeugsitz mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Eine gattungsgemäße Entriegelungseinheit für einen Fahrzeugsitz zur Entriegelung von mindestens zwei Verriegelungsvorrichtungen, welche eine über ein Betätigungselement eingeleitete Bewegung zur Entriegelung an die mindestens zwei Verriegelungsvorrichtungen überträgt, umfasst zwei Entriegelungselemente, wobei jeder Verriegelungsvorrichtung je ein Entriegelungselement zugeordnet ist, und wobei bei verriegelter Verriegelungsvorrichtung das zugeordnete Entriegelungselement sich in Verriegelungsstellung befindet, und wobei bei entriegelter Verriegelungsvorrichtung das zugeordnete Entriegelungselement sich in Entriegelungsstellung befindet. Dabei ist ein Anzeigeelement vorgesehen, welches sich in Anzeigestellung befindet, wenn die mindestens zwei Verriegelungsvorrichtungen entriegelt sind, und welches sich in Nichtanzeigestellung befindet, wenn die mindestens zwei Verriegelungsvorrichtungen verriegelt sind, und jedes in Entriegelungsstellung befindliche Entriegelungselement verhindert eine Bewegung des Anzeigeelements in die Nichtanzeigestellung, wobei das Anzeigeelement in der Anzeigestellung verbleibt, so lange mindestens eine Verriegelungsvorrichtung entriegelt ist.

Dadurch verbleibt das Anzeigeelement in der Anzeigestellung, so lange mindestens ein Entriegelungselement sich in Entriegelungsstellung befindet. Erst wenn alle Verriegelungsvorrichtungen verriegelt sind und sich alle zugeordneten Entriegelungselemente in Verriegelungsstellung befinden bewegt sich das Anzeigeelement in die Nichtanzeigestellung.

Erfindungsgemäss ist ein Zahnradgetriebe vorgesehen, welches eine über das Betätigungselement eingeleitete Bewegung zur Entriegelung an die Entriegelungselemente überträgt. Die Entriegelungselemente übertragen die Bewegung zur Entriegelung weiter an die Verriegelungsvorrichtung. Weiterhin erfindungsgemäss umfasst das Zahnradgetriebe einen Entriegelungshebel mit einer Entriegelungsverzahnung und ein Steuerzahnrad mit einer Steuerverzahnung, wobei der Entriegelungshebel mit dem Betätigungselement verbunden ist. Die Entriegelungsverzahnung kämmt dabei mit der Steuerverzahnung. Weiterhin erfindungsgemäss durchläuft das Steuerzahnrad bei einer über das Betätigungselement eingeleiteten Bewegung zur Entriegelung zunächst einen Leerweg und nimmt dann die Entriegelungselemente mit.

Vorzugsweise ist das Anzeigeelement dabei fest mit dem Betätigungselement verbunden oder einstückig mit diesem ausgebildet. Dadurch kann ein Benutzer bereits am Betätigungselement selbst den Verriegelungszustand der Verriegelungsvorrichtungen erkennen.

Das Betätigungselement ist dabei vorzugsweise als flexibles Gurtband ausgebildet und dadurch kostengünstig und einfach handhabbar. Das Anzeigeelement kann dabei als farblich markierter Anzeigebereich auf dem Gurtband ausgestaltet sein.

Dazu ist vorzugsweise an dem Steuerzahnrad ein Mitnehmer angebracht, welcher an einem ersten Gegenanschlag des ersten Entriegelungselements und an einem zweiten Gegenanschlag des zweiten Entriegelungselements anschlägt.

Der Entriegelungshebel weist dabei ein Anschlagelement auf, welches bei in Entriegelungsstellung befindlichem Entriegelungselement in Kontakt mit dem Entriegelungselement steht. Dadurch verbleibt das Anzeigeelement, das kinematisch mit dem Entriegelungshebel gekoppelt ist, in der Anzeigestellung bis alle Entriegelungselemente sich in Verriegelungsstellung befinden.

Vorteilhaft ist zwischen dem Steuerzahnrad und jedem Entriegelungselement je eine Steuerfeder angeordnet, welche das Entriegelungselement relativ zu dem Steuerzahnrad zur Entriegelungsstellung hin beaufschlagt.

Vorteilhaft sind die Entriegelungselemente und das Steuerzahnrad um eine gemeinsame Steuerschwenkachse drehbar gelagert, wodurch der Aufbau der Entriegelungseinheit vereinfacht ist.

Dabei ist das Steuerzahnrad vorzugsweise in axialer Richtung zwischen dem ersten Entriegelungselement und dem zweiten Entriegelungselement angeordnet.

Ein einfacher Aufbau der Entriegelungseinheit ergibt sich auch, wenn der Entriegelungshebel um eine Betätigungsschwenkachse schwenkbar gelagert ist, welche parallel zu der Steuerschwenkachse verläuft.

Vorzugsweise weist die Entriegelungseinheit auch eine Rückholfeder auf, welche den Entriegelungshebel stets in Richtung auf eine Ruheposition hin beaufschlagt.

Jede Verriegelungsvorrichtung ist jeweils mittels eines Bowdenzugs mit dem zugeordneten Entriegelungselement verbunden. Dadurch ist die Entriegelungseinheit von den Verriegelungsvorrichtungen entfernt anordenbar.

Die Aufgabe wird auch durch einen Fahrzeugsitz mit den im Anspruch 12 genannten Merkmalen gelöst, welcher eine erfindungsgemäße Entriegelungseinheit umfasst.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:

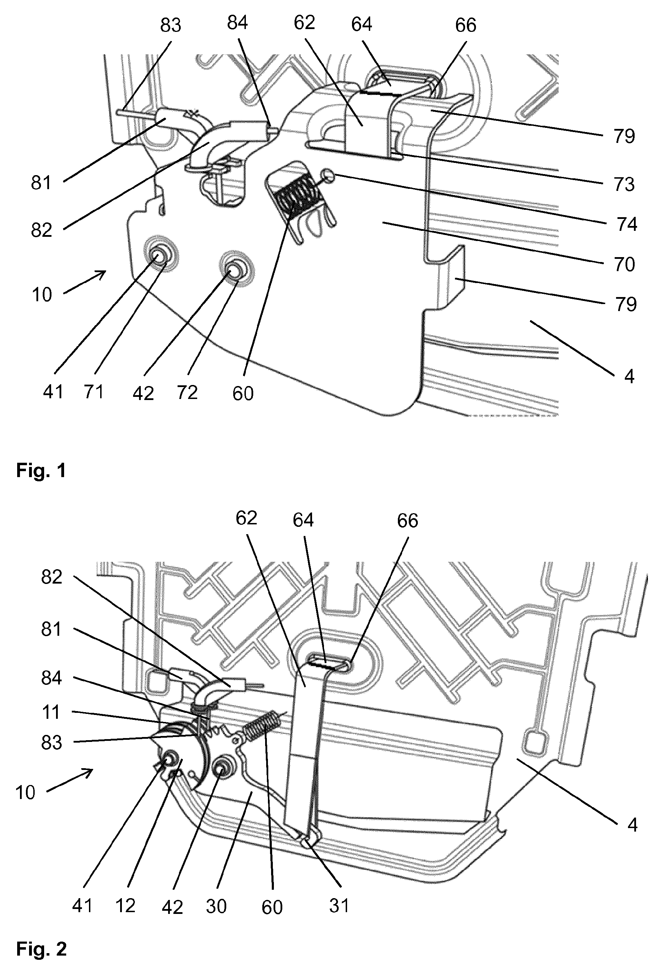

- Fig. 1:: eine perspektivische Darstellung einer Entriegelungseinheit,
- Fig. 2:: eine perspektivische Darstellung der Entriegelungseinheit aus Fig. 1 mit entfernter Grundplatte,
- Fig. 3:: eine schematische Darstellung der Entriegelungseinheit mit verriegelten Verriegelungsvorrichtungen in Ausgangsposition,
- Fig. 4:: eine schematische Darstellung der Entriegelungseinheit während des Entriegelns der Verriegelungsvorrichtungen,
- Fig. 5:: eine schematische Darstellung der Entriegelungseinheit mit entriegelten Verriegelungsvorrichtungen in Aktivierungsposition,
- Fig. 6:: eine schematische Darstellung der Entriegelungseinheit nach dem Entriegeln der Verriegelungsvorrichtungen bei zurück schwenkendem Entriegelungshebel,
- Fig. 7:: eine schematische Darstellung der Entriegelungseinheit mit entriegelten Verriegelungsvorrichtungen in Anzeigeposition,
- Fig. 8:: eine schematische Darstellung der Entriegelungseinheit mit einer entriegelten und einer verriegelten Verriegelungsvorrichtung,
- Fig. 9:: eine schematische Darstellung der Entriegelungseinheit mit verriegelten Verriegelungsvorrichtungen nach Rückkehr in die Ausgangsposition,
- Fig. 10:: eine Explosionsdarstellung einer Entriegelungseinheit,

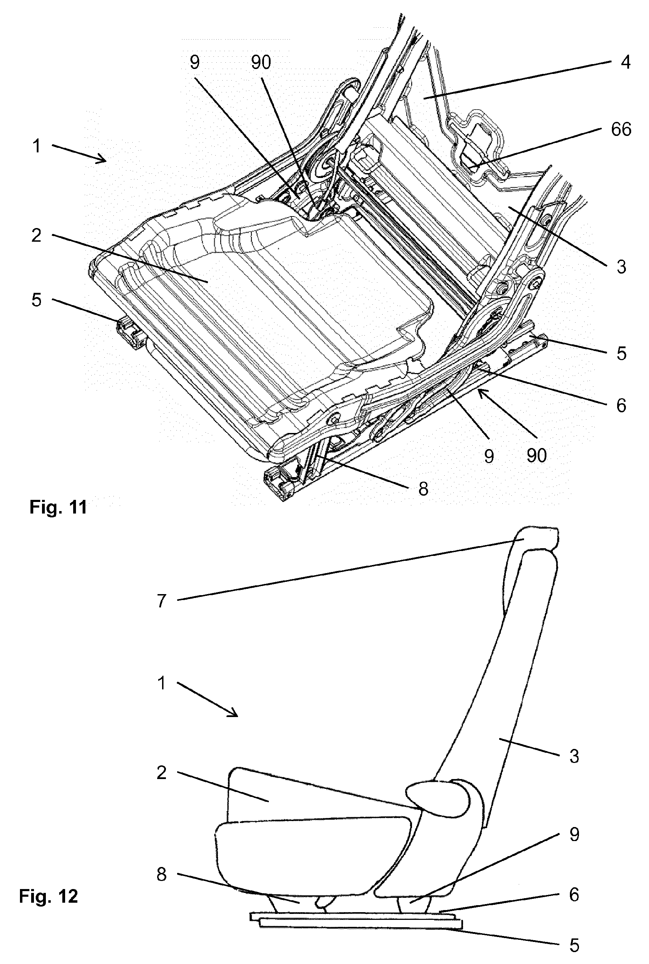

- Fig. 11:: eine perspektivische Darstellung einer Fahrzeugsitzstruktur und
- Fig. 12:: eine schematische Darstellung einer Fahrzeugsitzes.

Ein Fahrzeugsitz 1 für ein Kraftfahrzeug weist ein Sitzteil 2 und eine Rückenlehne 3 auf. Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Rückenlehne 3 ist um eine in Querrichtung verlaufende Achse schwenkbar an dem Sitzteil 2 angebracht und umfasst unter anderem ein Rückenlehnenblech 4. Mittels eines Einstellbeschlages ist die Rückenlehne 3 in mehreren Winkelstellungen relativ zu dem Sitzteil 2 einstellbar. An einem dem Sitzteil abgewandten Ende der Rückenlehne 3 ist eine Kopfstütze 7 angebracht, welche vorliegend höheneinstellbar und neigungseinstellbar ausgeführt ist.

Mittels zweier Schienenpaare, welche annähernd in Fahrtrichtung verlaufen, und welche jeweils eine mit der Fahrzeugstruktur verbundene Unterschiene 5 sowie eine in der Unterschiene 5 geführte Oberschiene 6 aufweisen, ist der Fahrzeugsitz 1 in Fahrtrichtung verschiebbar. Mittels einer nicht dargestellten Schienenverriegelungseinheit sind die Oberschienen 6 mit den Unterschienen 5 verriegelbar. Die beiden Schienenpaare sind dabei in Querrichtung nebeneinander und parallel verlaufend angeordnet.

Das Sitzteil 2 ist dabei mit den Oberschienen 6 lösbar verbunden. Dazu weist das Sitzteil 2 im in Fahrtrichtung vorderen Bereich beidseitig je einen vorderen Fuß 8 auf, welcher vorliegend in die jeweilige Oberschiene 6 eintaucht und dort einrastet. Ferner weist das Sitzteil 2 im in Fahrtrichtung hinteren Bereich beidseitig je einen hinteren Fuß 9 auf, welcher eine Verriegelungsvorrichtung 90 umfasst. Eine derartige Verriegelungsvorrichtung ist beispielsweise in der WO 2004 069 585 A1 offenbart, deren diesbezüglicher Offenbarungsgehalt ausdrücklich einbezogen wird.

In der Gebrauchsstellung des Fahrzeugsitzes 1 sind die Verriegelungsvorrichtungen 90 mit an den jeweiligen Oberschienen 6 angebrachten Bolzen verriegelt. Zum Überführen des Fahrzeugsitzes 1 in eine Packagestellung werden die beiden Verriegelungsvorrichtungen 90 der hinteren Füße 9 gleichzeitig geöffnet, wodurch die hinteren Füße 9 sich von den Oberschienen 6 lösen. Ein derart ausgestalteter Fahrzeugsitz ist beispielsweise in der o.g. DE 10 2006 015 922 B4 offenbart.

Auch die vorderen Füße 8 können je eine Verriegelungsvorrichtung aufweisen, wie in der DE 10 2006 015 922 B4 auch offenbart ist. Auch ist es denkbar, dass der Fahrzeugsitz 1 keine Schienenpaare zur Längseinstellung aufweist, sondern dass die vorderen Füße 8 und die hinteren Füße 9 direkt mit der Fahrzeugstruktur verbunden sind.

Zum gleichzeitigen Entriegeln beider Verriegelungsvorrichtungen 90 der hinteren Füße 9 ist eine Entriegelungseinheit 10 vorgesehen, welche an dem Rückenlehnenblech 4 befestigt ist. Die Entriegelungseinheit 10 ist dabei auf der in Fahrtrichtung vorderen Seite des Rückenlehnenblechs 4 angeordnet.

Die Entriegelungseinheit 10 umfasst eine Grundplatte 70, welche weitgehend parallel zu dem Rückenlehnenblech 4 angeordnet ist und welche gemeinsam mit dem Rückenlehnenblech 4 eine teilweise Kapselung der übrigen Teile der Entriegelungseinheit 10 bildet. Mehrere Stege 79 stehen rechtwinklig von der Grundplatte 70 ab, wobei die der Grundplatte 70 abgewandten Enden der Stege 79 in entsprechende Öffnungen im Rückenlehnenblech 4 eingesetzt sind, so dass die Grundplatte 70 formschlüssig an dem Rückenlehnenblech 4 befestigt ist.

Die Grundplatte 70 weist ferner eine erste Lageröffnung 71 auf, welche zur Lagerung eines Steuerdrehbolzens 41 dient, und eine zweite Lageröffnung 72, welche zur Lagerung eines Betätigungsdrehbolzens 42 dient. Der Steuerdrehbolzen 41 und der Betätigungsdrehbolzen 42 weisen vorliegend eine annähernd zylindrische Form auf und sind mit der Grundplatte 70 verbunden. Die der Grundplatte 70 abgewandten Enden des Betätigungsdrehbolzens 42 und des Steuerdrehbolzens 41 sind vorliegend in entsprechenden Öffnungen in dem Rückenlehnenblech 4 gelagert.

Die Zylinderachse des Betätigungsdrehbolzens 42, welche im Folgenden als Betätigungsschwenkachse 44 bezeichnet wird, steht rechtwinklig von der Grundplatte 70 und von dem Rückenlehnenblech 4 ab. Ebenso steht die Zylinderachse des Steuerdrehbolzens 41, welche im Folgenden als Steuerschwenkachse 43 bezeichnet wird, rechtwinklig von der Grundplatte 70 und von dem Rückenlehnenblech 4 ab. Die Steuerschwenkachse 43 und die Betätigungsschwenkachse 44 verlaufen also parallel zueinander.

Ein Entriegelungshebel 30 ist um die Betätigungsschwenkachse 44 des Betätigungsdrehbolzens 42 schwenkbar gelagert. Dazu weist der Entriegelungshebel 30 vorliegend eine durchgehende, kreisrunde Hebelöffnung 35 auf, welche von dem Betätigungsdrehbolzen 42 durchdrungen wird. Eine Rückholfeder 60 ist an einem ersten Ende in eine Federöse 32 des Entriegelungshebels 30 eingehängt. Das dem ersten Ende abgewandte zweite Ende der Rückholfeder 60 ist in eine Befestigungsöse 74 an der Grundplatte 70 eingehängt. Die Rückholfeder 60 ist vorliegend als spiralförmige Zugfeder ausgeführt und beaufschlagt den Entriegelungshebel 30 stets in Richtung auf eine Ruheposition hin.

An einem ersten Arm weist der Entriegelungshebel 30 eine Gurtöse 31 auf, in welche ein als Betätigungselement dienendes Gurtband 62 eingehängt ist. Das Gurtband 62 verläuft von der Gurtöse 31 zunächst in Vertikalrichtung zu einer Gurtdurchführung 73 an dem Grundblech 70. Die Gurtdurchführung 73 ist eine Öffnung in dem Grundblech 70 im Bereich eines Steges 79. An der Gurtdurchführung 73 wird das Gurtband 62 entgegen der Fahrtrichtung umgelenkt und zu einer Gurtöffnung 66 im Rückenlehnenblech 4 geführt. Das Gurtband 62 ist durch die Gurtöffnung 66 hindurch geführt und ragt entgegen der Fahrtrichtung, also nach hinten, aus der Rückenlehne 3 heraus. An dem aus der Rückenlehne 3 ragenden Ende des Gurtbandes 62 ist ein als Anzeigeelement dienender Anzeigebereich 64 vorgesehen, welcher optisch auffällig gestaltet ist, vorliegend in roter Farbe.

Durch Zug an dem aus der Rückenlehne 3 ragenden Ende des Gurtbandes 62 wird der Entriegelungshebel 30 um die Betätigungsschwenkachse 44 in Richtung zu seiner Betätigungsposition hin geschwenkt. Ein an der Grundplatte 70 vorgesehenes Begrenzungselement 78 wirkt als Anschlag und begrenzt die Bewegung des Entriegelungshebels 30 nach Erreichen der Betätigungsposition.

Um die Steuerschwenkachse 43 des Steuerdrehbolzens 41 drehbar ist ein Steuerzahnrad 20 gelagert. Dazu weist das Steuerzahnrad 20 vorliegend eine durchgehende, kreisrunde Zahnradöffnung 25 auf, welche von dem Steuerdrehbolzen 41 durchdrungen wird. Das Steuerzahnrad 20 weist etwa entlang seines halben Umfangs eine Steuerverzahnung 23 auf, welche mit einer Entriegelungsverzahnung 33 des Entriegelungshebels 30 kämmt. Die Entriegelungsverzahnung 33 ist dabei an einem zweiten Arm des Entriegelungshebels 30 angebracht, welcher dem ersten Arm mit der Gurtöse 31 annähernd diametral gegenüber liegt.

Ein erstes Entriegelungselement 11 ist axial neben dem Steuerzahnrad 20 auf dem Steuerdrehbolzen 41 um die Steuerschwenkachse 43 drehbar gelagert. Das erste Entriegelungselement 11 weist unter anderem einen zylindersegmentartigen Bereich mit einer ersten Mantelfläche 55 auf, in dem eine erste Führungsnut 15 ausgebildet ist. In die erste Führungsnut 15 ist ein erster Bowdenzug 83 eingelegt. Der erste Bowdenzug 83 weist an seinem Ende einen ersten Nippel 85 auf, welcher in einer ersten Bowdenzugeinhängung 13 des ersten Entriegelungselements 11 eingehängt ist.

Der erste Bowdenzug 83 verläuft von dem ersten Entriegelungselement 11 in Vertikalrichtung zu einem ersten Umlenkbogen 81, welcher an einer ersten Aussparung 75 an der Grundplatte 70 befestigt ist. Der erste Bowdenzug 83 verläuft weiter durch den ersten Umlenkbogen 81 hindurch, wird dort annähernd rechtwinklig umgelenkt und verläuft weiter bis zu der einen der beiden Verriegelungsvorrichtungen 90.

Ein zweites Entriegelungselement 12 ist ebenfalls axial neben dem Steuerzahnrad 20 auf dem Steuerdrehbolzen 41 um die Steuerschwenkachse 43 drehbar gelagert. Das zweite Entriegelungselement 12 weist unter anderem einen zylindersegmentartigen Bereich mit einer zweiten Mantelfläche 56 auf, in dem eine zweite Führungsnut 16 ausgebildet ist. In die zweite Führungsnut 16 ist ein zweiter Bowdenzug 84 eingelegt. Der zweite Bowdenzug 84 weist an seinem Ende einen zweiten Nippel 86 auf, welcher in einer zweiten Bowdenzugeinhängung 14 des zweiten Entriegelungselements 12 eingehängt ist.

Der zweite Bowdenzug 84 verläuft von dem zweiten Entriegelungselement 12 in Vertikalrichtung zu einem zweiten Umlenkbogen 82, welcher an einer zweiten Aussparung 76 an der Grundplatte 70 befestigt ist. Der zweite Bowdenzug 84 verläuft weiter durch den zweiten Umlenkbogen 82 hindurch, wird dort annähernd rechtwinklig umgelenkt und verläuft weiter bis zu der anderen der beiden Verriegelungsvorrichtungen 90.

Wenn die Entriegelungseinheit 10 sich in Ausgangsposition befindet, so befindet sich der Entriegelungshebel 30 in Ruheposition, das Steuerzahnrad 20 befindet sich in Verriegelungsposition, die Entriegelungselemente 11, 12 befinden sich in Verriegelungsstellung, und die beiden Verriegelungsvorrichtungen 90 sind verriegelt. Wenn die Entriegelungseinheit 10 sich in Aktivierungsposition befindet, so befindet sich der Entriegelungshebel 30 in Betätigungsposition, das Steuerzahnrad 20 befindet sich in Entriegelungsposition, die Entriegelungselemente 11, 12 befinden sich in Entriegelungsstellung, und die beiden Verriegelungsvorrichtungen 90 sind entriegelt.

Zwischen dem Steuerzahnrad 20 und dem ersten Entriegelungselement 11 ist eine erste Steuerfeder 51 angeordnet, welche das erste Entriegelungselement 11 relativ zu dem Steuerzahnrad 20 zur Entriegelungsstellung hin beaufschlagt. Ebenso ist zwischen dem Steuerzahnrad 20 und dem zweiten Entriegelungselement 12 eine zweite Steuerfeder 52 angeordnet, welche das zweite Entriegelungselement 12 relativ zu dem Steuerzahnrad 20 zur Entriegelungsstellung hin beaufschlagt. Die Steuerfedern 51, 52 sind dabei vorliegend als Drehschenkelfedern ausgebildet und in entsprechende Öffnungen in den Entriegelungselementen 11, 12 und dem Steuerzahnrad 20 eingesteckt. In axialer Richtung bezüglich der Steuerschwenkachse 43 ist das Steuerzahnrad 20 dabei zwischen dem ersten Entriegelungselement 11 und dem zweiten Entriegelungselement 12 angeordnet. Die Steuerfedern 51, 52 befinden sich jeweils zwischen dem Steuerzahnrad 20 und dem zugehörigen Entriegelungselement 11, 12.

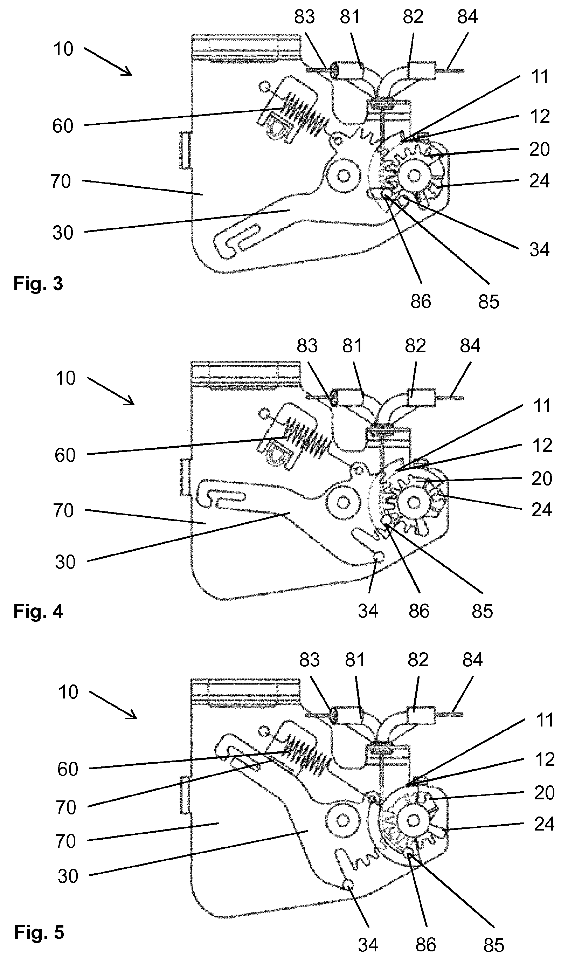

In der Ausgangsposition der Entriegelungseinheit 10, welche in Fig. 3 dargestellt ist, ragt ein Ende des Gurtbandes 62 aus der Rückenlehne 3 nach hinten heraus. Der Anzeigebereich 64 liegt dabei weitgehend innerhalb der Rückenlehne 3 und ist außen nicht sichtbar. Der Anzeigebereich 64 ist in Nichtanzeigestellung. Dadurch wird einem Benutzer signalisiert, dass beide Verriegelungsvorrichtungen 90 verriegelt sind.

Durch Zug an dem aus der Rückenlehne 3 heraus ragenden Ende des Gurtbandes 62 wird der Entriegelungshebel 30 entgegen der Kraft der Rückholfeder 60 in Richtung auf die Betätigungsposition hin geschwenkt. Dabei wird das Steuerzahnrad 20 in Richtung auf die Entriegelungsposition hin gedreht. Nachdem das Steuerzahnrad 20 einen Leerweg durchlaufen hat schlägt ein an dem Steuerzahnrad 20 angebrachter Mitnehmer 24 an einem ersten Gegenanschlag 17 des ersten Entriegelungselements 11 und an einem zweiten Gegenanschlag 18 des zweiten Entriegelungselements 12 an, wie in Fig. 4 dargestellt.

Der Mitnehmer 24 ist vorliegend in einem der Steuerverzahnung 23 diametral gegenüberliegenden Bereich des Steuerzahnrades 20 angebracht und steht in axialer Richtung beidseitig von diesem ab. Die Gegenanschläge 17, 18 der Entriegelungselemente 11, 12 sind im Wesentlichen als in radialer und axialer Richtung verlaufende glatte Flächen ausgebildet.

Durch weiteren Zug an dem Ende des Gurtbandes 62 nimmt das Steuerzahnrad 20 die Entriegelungselemente 11, 12 mit, wodurch diese in Richtung auf die Entriegelungsstellung hin gedreht werden. Dabei erfolgt ein Zug an den Bowdenzügen 83, 84, wodurch die Verriegelungsvorrichtungen 90 entriegelt werden. Diese Bewegung endet, wenn der Entriegelungshebel 30 an dem Begrenzungselement 78 anschlägt und die Entriegelungseinheit 10 sich in Aktivierungsposition befindet, wie in Fig. 5 dargestellt. Der Anzeigebereich 64 des Gurtbandes 62 ragt dabei aus der Rückenlehne 3 heraus und ist außen sichtbar. Der Anzeigebereich 64 ist in Anzeigestellung. Dadurch wird einem Benutzer signalisiert, dass mindestens eine der beiden Verriegelungsvorrichtungen 90 entriegelt ist.

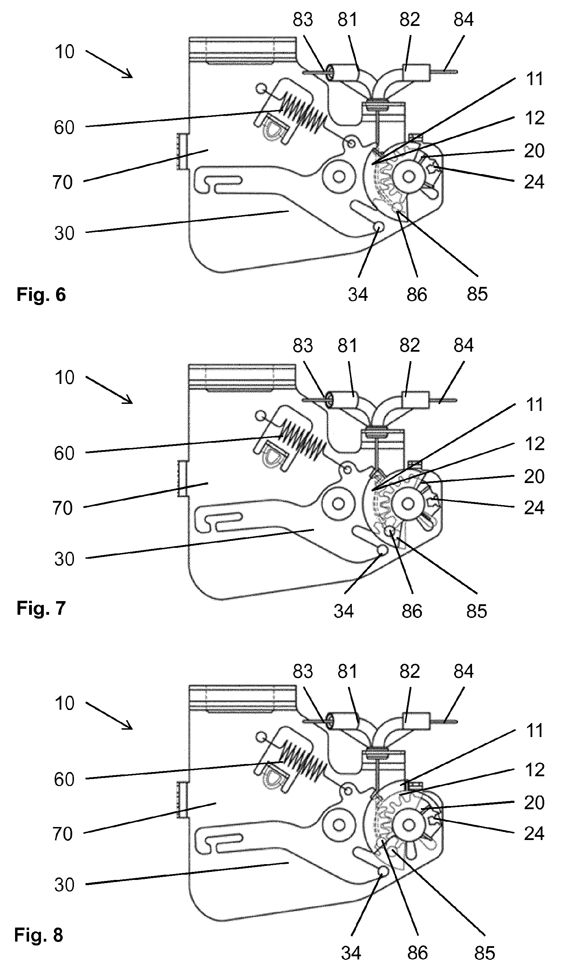

Lässt der Benutzer nun das Gurtband 62 los, so wird der Entriegelungshebel 30 durch die Kraft der Rückholfeder 60 in Richtung auf die Ruheposition hin geschwenkt. Dadurch wird auch das Steuerzahnrad 20 in Richtung auf die Verriegelungsposition hin gedreht und der Mitnehmer 24 entfernt sich von den Gegenanschlägen 17, 18 der Entriegelungselemente 11, 12. Die Entriegelungselemente 11, 12 verbleiben, aufgrund der Beaufschlagung durch die Steuerfedern 51, 52, in der Entriegelungsstellung. Dieser Zustand ist in Fig. 6 dargestellt.

Die Bewegung des Entriegelungshebels 30 endet, wenn ein Anschlagelement 34 des Entriegelungshebels 30 an die erste Mantelfläche 55 und/oder an die zweite Mantelfläche 56 anschlägt. Das Anschlagelement 34 ist vorliegend zylinderförmig ausgestaltet und an einem dritten Arm des Entriegelungshebels 30 angebracht, welcher nahe dem zweiten Arm mit der Entriegelungsverzahnung 33 angeordnet ist, und steht in axialer Richtung beidseitig von dem dritten Arm ab.

Dieser Zustand ist in Fig. 7 dargestellt. Der Entriegelungshebel 30 befindet sich in Offenhalteposition und die Entriegelungseinheit 10 befindet sich in Anzeigeposition. Das Gurtband 62 ist, im Vergleich zu der Aktivierungsposition, zwar teilweise in die Rückenlehne 3 eingezogen, der Anzeigebereich 64 des Gurtbandes 62 ragt aber immer noch aus der Rückenlehne 3 heraus und ist außen sichtbar. Der Anzeigebereich 64 ist also noch in Anzeigestellung. Dadurch wird einem Benutzer signalisiert, dass mindestens eine der beiden Verriegelungsvorrichtungen 90 entriegelt ist.

Die hinteren Füße 9 des Fahrzeugsitzes 1 können nun von den Oberschienen 6 entfernt werden, und der Fahrzeugsitz 1 kann nach vorne geklappt oder aus dem Fahrzeug entnommen werden. Beim erneuten Aufsetzen der hinteren Füße 9 auf die Oberschienen 6 kann der Fahrzeugsitz 1 verkanten. Dabei verriegelt nur eine der beiden Verriegelungsvorrichtungen 90 mit dem zugeordneten Bolzen in der Oberschiene 6, während die andere der beiden Verriegelungsvorrichtungen 90 nicht oder erst mit zeitlicher Verzögerung mit dem zugeordneten Bolzen in der Oberschiene 6 verriegelt.

Ein solcher Zustand, bei dem die mit dem ersten Entriegelungselement 11 verbundene Verriegelungsvorrichtung 90 entriegelt ist, und die mit dem zweiten Entriegelungselement 12 verbundene Verriegelungsvorrichtung 90 verriegelt ist, ist in Fig. 8 dargestellt. Beim Verriegeln zieht die mit dem zweiten Entriegelungselement 12 verbundene Verriegelungsvorrichtung 90 an dem zweiten Bowdenzug 84, wodurch das zweite Entriegelungselement 12 in die Verriegelungsstellung gedreht wird. Das erste Entriegelungselement 11 verbleibt jedoch in der Entriegelungsstellung.

Das Anschlagelement 34 des Entriegelungshebels 30 verliert dabei den Kontakt zu der zweiten Mantelfläche 56, liegt jedoch immer noch an der ersten Mantelfläche 55 an. Der Entriegelungshebel 30 verbleibt daher in der Offenhalteposition und der Anzeigebereich 64 des Gurtbandes 62 ragt immer noch aus der Rückenlehne 3 heraus. Der Anzeigebereich 64 ist also noch in Anzeigestellung und signalisiert einem Benutzer, dass mindestens eine der beiden Verriegelungsvorrichtungen 90 entriegelt ist.

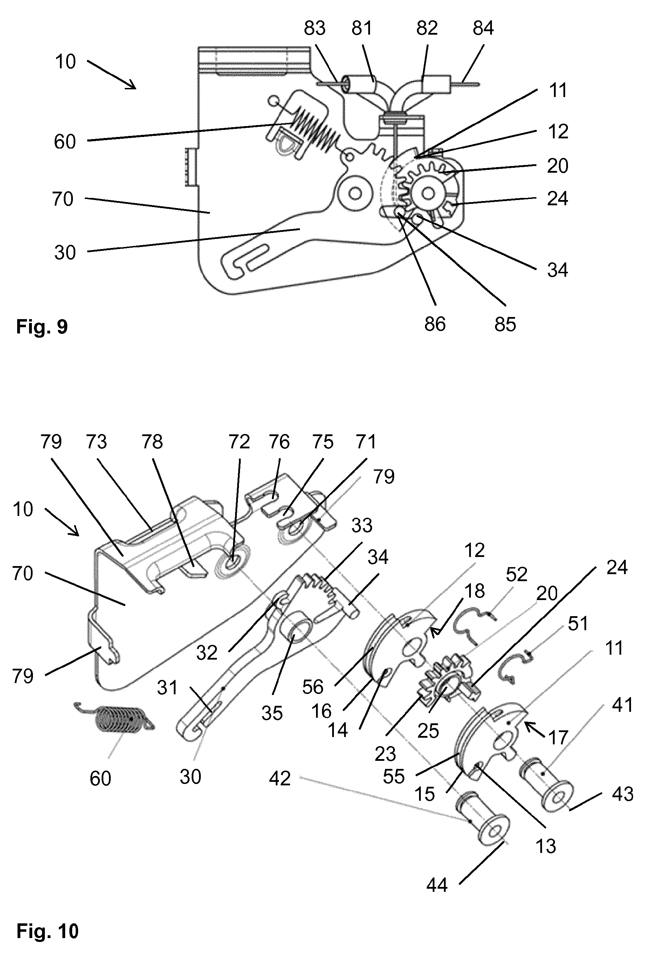

Verriegelt nun auch die mit dem ersten Entriegelungselement 11 verbundene Verriegelungsvorrichtung 90, so zieht diese an dem ersten Bowdenzug 83, wodurch auch das erste Entriegelungselement 11 in die Verriegelungsstellung gedreht wird. Dieser Zustand ist in Fig. 9 dargestellt. Dabei verliert das Anschlagelement 34 des Entriegelungshebels 30 auch den Kontakt zu der ersten Mantelfläche 55 und der Entriegelungshebel 30 wird durch die Kraft der Rückholfeder 60 in die Ruheposition zurück gedreht. Dabei wird auch das Steuerzahnrad 20 in die Verriegelungsposition zurück gedreht.

Die Entriegelungseinheit 10 befindet sich somit wieder in der Ausgangsposition. Das Gurtband 62 wird von dem Entriegelungshebel 30 dabei so weit in die Rückenlehne 3 hinein gezogen, dass der Anzeigebereich 64 des Gurtbandes 62 weitgehend innerhalb der Rückenlehne 3 liegt und außen nicht sichtbar ist. Der Anzeigebereich 64 ist somit wieder in Nichtanzeigestellung. Dadurch wird einem Benutzer signalisiert, dass beide Verriegelungsvorrichtungen 90 verriegelt sind.

Die Entriegelungseinheit 10 kann auch mit mehr als zwei Verriegelungsvorrichtungen 90 zusammenwirken. In diesem Fall ist für jede Verriegelungsvorrichtung 90 ein eigenes Entriegelungselement auf dem Steuerdrehbolzen 41 angeordnet.

### Bezugszeichenliste

- 1: Fahrzeugsitz
- 2: Sitzteil
- 3: Rückenlehne
- 4: Rückenlehnenblech
- 5: Unterschiene
- 6: Oberschiene
- 7: Kopfstütze
- 8: Vorderer Fuß
- 9: Hinterer Fuß
- 10: Entriegelungseinheit
- 11: Erstes Entriegelungselement
- 12: Zweites Entriegelungselement
- 13: Erste Bowdenzugeinhängung
- 14: Zweite Bowdenzugeinhängung
- 15: Erste Führungsnut
- 16: Zweite Führungsnut
- 17: Erster Gegenanschlag
- 18: Zweiter Gegenanschlag
- 20: Steuerzahnrad
- 23: Steuerverzahnung
- 24: Mitnehmer
- 25: Zahnradöffnung
- 30: Entriegelungshebel
- 31: Gurtöse
- 32: Federöse
- 33: Entriegelungsverzahnung
- 34: Anschlagelement
- 35: Hebelöffnung
- 41: Steuerdrehbolzen
- 42: Betätigungsdrehbolzen
- 43: Steuerschwenkachse
- 44: Betätigungsschwenkachse
- 51: Erste Steuerfeder
- 52: Zweite Steuerfeder
- 55: Erste Mantelfläche
- 56: Zweite Mantelfläche
- 60: Rückholfeder
- 62: Gurtband
- 64: Anzeigebereich
- 66: Gurtöffnung
- 70: Grundplatte
- 71: Erste Lageröffnung
- 72: Zweite Lageröffnung
- 73: Gurtdurchführung
- 74: Befestigungsöse
- 75: Erste Aussparung
- 76: Zweite Aussparung
- 78: Begrenzungselement
- 79: Steg
- 81: Erster Umlenkbogen
- 82: Zweiter Umlenkbogen
- 83: Erster Bowdenzug
- 84: Zweiter Bowdenzug
- 85: Erster Nippel
- 86: Zweiter Nippel
- 90: Verriegelungsvorrichtung

## Patentansprüche

1. Entriegelungseinheit (10) für einen Fahrzeugsitz (1), zur Entriegelung von mindestens zwei Verriegelungsvorrichtungen (90), welche eine über ein Betätigungselement (62) eingeleitete Bewegung zur Entriegelung an die mindestens zwei Verriegelungsvorrichtungen (90) überträgt, wobei jeder Verriegelungsvorrichtung (90) je ein Entriegelungselement (11, 12) zugeordnet ist, wobei bei verriegelter Verriegelungsvorrichtung (90) das zugeordnete Entriegelungselement (11, 12) sich in Verriegelungsstellung befindet, wobei bei entriegelter Verriegelungsvorrichtung (90) das zugeordnete Entriegelungselement (11, 12) sich in Entriegelungsstellung befindet, wobei ein Anzeigeelement (64) vorgesehen ist, welches sich in Anzeigestellung befindet, wenn die mindestens zwei Verriegelungsvorrichtungen (90) entriegelt sind, und welches sich in Nichtanzeigestellung befindet, wenn die mindestens zwei Verriegelungsvorrichtungen (90) verriegelt sind, und jedes in Entriegelungszustand befindliche Entriegelungselement (11, 12) eine Bewegung des Anzeigeelements (64) in die Nichtanzeigestellung verhindert, wobei das Anzeigeelement (64) in der Anzeigestellung verbleibt, so lange mindestens eine Verriegelungsvorrichtung (90) entriegelt ist,
**dadurch gekennzeichnet,**
**dass** ein Zahnradgetriebe vorgesehen ist, welches eine über das Betätigungselement (62) eingeleitete Bewegung zur Entriegelung an die Entriegelungselemente (11, 12) überträgt, wobei das Zahnradgetriebe einen Entriegelungshebel (30) mit einer Entriegelungsverzahnung (33) und ein Steuerzahnrad (20) mit einer Steuerverzahnung (23) umfasst, wobei der Entriegelungshebel (30) mit dem Betätigungselement (62) verbunden ist und das Steuerzahnrad (20) bei einer über das Betätigungselement (62) eingeleiteten Bewegung zur Entriegelung mitnimmt.

2. Entriegelungseinheit (10) nach Anspruch 1, **dadurch gekennzeichnet, dass** das Anzeigeelement (64) fest mit dem Betätigungselement (62) verbunden oder einstückig mit diesem ausgebildet ist.

3. Entriegelungseinheit (10) nach einem der vorstehenden Ansprüche, **dadurch gekennzeichnet, dass** das Betätigungselement (62) als flexibles Gurtband (62) ausgebildet ist.

4. Entriegelungseinheit (10) nach einem der vorstehenden Ansprüche, **dadurch gekennzeichnet, dass** an dem Steuerzahnrad (20) ein Mitnehmer (24) angebracht ist, welcher an einem ersten Gegenanschlag (17) des ersten Entriegelungselements (11) und an einem zweiten Gegenanschlag (18) des zweiten Entriegelungselements (12) anschlägt.

5. Entriegelungseinheit (10) nach einem der vorstehenden Ansprüche, **dadurch gekennzeichnet, dass** der Entriegelungshebel (30) ein Anschlagelement (34) aufweist, welches bei in Entriegelungsstellung befindlichem Entriegelungselement (11, 12) in Kontakt mit dem Entriegelungselement (11, 12) steht.

6. Entriegelungseinheit (10) nach einem der vorstehenden Ansprüche, **dadurch gekennzeichnet, dass** zwischen dem Steuerzahnrad (20) und jedem Entriegelungselement (11, 12) je eine Steuerfeder (51, 52) angeordnet ist, welche das Entriegelungselement (11, 12) relativ zu dem Steuerzahnrad (20) zur Entriegelungsstellung hin beaufschlagt.

7. Entriegelungseinheit (10) nach einem der vorstehenden Ansprüche, **dadurch gekennzeichnet, dass** die Entriegelungselemente (11, 12) und das Steuerzahnrad (20) um eine gemeinsame Steuerschwenkachse (43) drehbar gelagert sind.

8. Entriegelungseinheit (10) nach Anspruch 7, **dadurch gekennzeichnet, dass** das Steuerzahnrad (20) in axialer Richtung zwischen dem ersten Entriegelungselement (11) und dem zweiten Entriegelungselement (12) angeordnet ist.

9. Entriegelungseinheit (10) nach einem der Ansprüche 7 bis 8, **dadurch gekennzeichnet, dass** der Entriegelungshebel (30) um eine Betätigungsschwenkachse (44) schwenkbar gelagert ist, welche parallel zu der Steuerschwenkachse (43) verläuft.

10. Entriegelungseinheit (10) nach einem der vorstehenden Ansprüche, **dadurch gekennzeichnet, dass** eine Rückholfeder (60) den Entriegelungshebel (30) stets in Richtung auf eine Ruheposition hin beaufschlagt.

11. Entriegelungseinheit (10) nach einem der vorstehenden Ansprüche, **dadurch gekennzeichnet, dass** jede Verriegelungsvorrichtung (90) jeweils mittels eines Bowdenzugs (83, 84) mit dem zugeordneten Entriegelungselement (11, 12) verbunden ist.

12. Fahrzeugsitz (1), umfassend eine Entriegelungseinheit (10) nach einem der vorstehenden Ansprüche.

## Claims

1. Unlocking unit (10) for a vehicle seat (1), for unlocking at least two locking devices (90), which unlocking unit transmits a movement, which is introduced via an actuating element (62), for unlocking purposes to the at least two locking devices (90), wherein each locking device (90) is in each case assigned an unlocking element (11, 12), wherein, when the locking device (90) is locked, the assigned unlocking element (11, 12) is in the locking position, wherein, when the locking device (90) is unlocked, the assigned unlocking element (11, 12) is in the unlocking position, wherein a display element (64) is provided which is in the display position when the at least two locking devices (90) are unlocked, and which is in the non-display position when the at least two locking devices (90) are locked, and each unlocking element (11, 12) located in the unlocking condition prevents a movement of the display element (64) into the non-display position, wherein the display element (64) remains in the display position as long as at least one locking device (90) is unlocked, **characterized in that** a gearwheel mechanism is provided which transmits a movement, which is introduced via the actuating element (62), for unlocking purposes to the unlocking elements (11, 12), wherein the gearwheel mechanism comprises an unlocking lever (30) with an unlocking toothing (33) and a control gearwheel (20) with a control toothing (23), wherein the unlocking lever (30) is connected to the actuating element (62) and, in the event of a movement, which is introduced via the actuating element (62), for unlocking purposes, carries along the control gearwheel (20).

2. Unlocking unit (10) according to Claim 1, **characterized in that** the display element (64) is connected fixedly to the actuating element (62) or is formed integrally therewith.

3. Unlocking unit (10) according to either of the preceding claims, **characterized in that** the actuating element (62) is designed as a flexible belt strap (62).

4. Unlocking unit (10) according to one of the preceding claims, **characterized in that** a driver (24) is attached to the control gearwheel (20), said driver striking against a first counterstop (17) of the first unlocking element (11) and against a second counterstop (18) of the second unlocking element (12).

5. Unlocking unit (10) according to one of the preceding claims, **characterized in that** the unlocking lever (30) has a stop element (34) which, when the unlocking element (11, 12) is in the unlocking position, is in contact with the unlocking element (11, 12).

6. Unlocking unit (10) according to one of the preceding claims, **characterized in that** a control spring (51, 52) is arranged in each case between the control gearwheel (20) and each unlocking element (11, 12), which control spring loads the unlocking element (11, 12) relative to the control gearwheel (20) toward the unlocking position.

7. Unlocking unit (10) according to one of the preceding claims, **characterized in that** the unlocking elements (11, 12) and the control gearwheel (20) are mounted rotatably about a common control pivot axis (43).

8. Unlocking unit (10) according to Claim 7, **characterized in that** the control gearwheel (20) is arranged in the axial direction between the first unlocking element (11) and the second unlocking element (12).

9. Unlocking unit (10) according to either of Claims 7 and 8, **characterized in that** the unlocking lever (30) is mounted pivotably about an actuating pivot axis (44) which runs parallel to the control pivot axis (43).

10. Unlocking unit (10) according to one of the preceding claims, **characterized in that** a return spring (60) loads the unlocking lever (30) constantly in the direction of a rest position.

11. Unlocking unit (10) according to one of the preceding claims, **characterized in that** each locking device (90) is in each case connected by means of a Bowden cable (83, 84) to the assigned unlocking element (11, 12).

12. Vehicle seat (1) comprising an unlocking unit (10) according to one of the preceding claims.

## Revendications

1. Ensemble de déverrouillage (10) destiné à un siège de véhicule (1), pour le déverrouillage d'au moins deux dispositifs de verrouillage (90), qui transmet un mouvement de déverrouillage introduit par un élément d'actionnement (62) auxdits au moins deux dispositifs de verrouillage (90), dans lequel un élément de déverrouillage (11, 12) est respectivement associé à chaque dispositif de verrouillage (90), dans lequel, lorsque l'élément de verrouillage (90) est verrouillé, l'élément de déverrouillage associé (11, 12) se trouve en position de verrouillage, dans lequel, lorsque l'élément de verrouillage (90) est déverrouillé, l'élément de déverrouillage associé (11, 12) se trouve en position de déverrouillage, dans lequel il est prévu un élément d'affichage (64), qui se trouve en position d'affichage, lorsque lesdits au moins deux dispositifs de verrouillage (90) sont déverrouillés, et qui se trouve en position de non-affichage, lorsque lesdits au moins deux dispositifs de verrouillage (90) sont verrouillés, et chaque élément de déverrouillage (11, 12) se trouvant en état de déverrouillage empêche un mouvement de l'élément d'affichage (64) vers la position de non-affichage, dans lequel l'élément d'affichage (64) reste dans la position d'affichage, aussi longtemps qu'au moins un dispositif de verrouillage (90) est déverrouillé,
**caractérisé en ce qu'**il est prévu une transmission à roues dentées, qui transmet un mouvement de déverrouillage introduit au moyen de l'élément d'actionnement (62) aux éléments de déverrouillage (11, 12), dans lequel la transmission à roues dentées comprend un levier de déverrouillage (30) avec une denture de déverrouillage (33) et une roue dentée de commande (20) avec une denture de commande (23), dans lequel le levier de déverrouillage (30) est relié à l'élément d'actionnement (62) et entraîne la roue dentée de commande (20) lors d'un mouvement de déverrouillage introduit au moyen de l'élément d'actionnement (62).

2. Ensemble de déverrouillage (10) selon la revendication 1, **caractérisé en ce que** l'élément d'affichage (64) est assemblé fixement à l'élément d'actionnement (62) ou est réalisé d'une seule pièce avec celui-ci.

3. Ensemble de déverrouillage (10) selon l'une quelconque des revendications précédentes, **caractérisé en ce que** l'élément d'actionnement (62) est réalisé sous la forme d'une sangle flexible (62).

4. Ensemble de déverrouillage (10) selon l'une quelconque des revendications précédentes, **caractérisé en ce qu'**un entraîneur (24) est placé sur la roue dentée de commande (20), lequel bute contre une première contrebutée (17) du premier élément de déverrouillage (11) et contre une deuxième contrebutée (18) du deuxième élément de déverrouillage (12).

5. Ensemble de déverrouillage (10) selon l'une quelconque des revendications précédentes, **caractérisé en ce que** le levier de déverrouillage (30) présente un élément de butée (34), qui est en contact avec l'élément de déverrouillage (11, 12) lorsque l'élément de déverrouillage (11, 12) se trouve en position de déverrouillage.

6. Ensemble de déverrouillage (10) selon l'une quelconque des revendications précédentes, **caractérisé en ce qu'**un ressort de commande (51, 52) est à chaque fois disposé entre la roue dentée de commande (20) et chaque élément de déverrouillage (11, 12), lequel pousse l'élément de déverrouillage (11, 12) en direction de la position de déverrouillage par rapport à la roue dentée de commande (20).

7. Ensemble de déverrouillage (10) selon l'une quelconque des revendications précédentes, **caractérisé en ce que** les éléments de déverrouillage (11, 12) et la roue dentée de commande (20) sont montés de façon rotative autour d'un axe de pivotement de commande commun (43).

8. Ensemble de déverrouillage (10) selon la revendication 7, **caractérisé en ce que** la roue dentée de commande (20) est disposée en direction axiale entre le premier élément de déverrouillage (11) et le deuxième élément de déverrouillage (12).

9. Ensemble de déverrouillage (10) selon l'une quelconque des revendications 7 à 8, **caractérisé en ce que** le levier de déverrouillage (30) est monté de façon pivotante autour d'un axe de pivotement de commande (44), qui est parallèle à l'axe de pivotement de commande (43).

10. Ensemble de déverrouillage (10) selon l'une quelconque des revendications précédentes, **caractérisé en ce qu'**un ressort de rappel (60) attire en permanence le levier de déverrouillage (30) en direction d'une position de repos.

11. Ensemble de déverrouillage (10) selon l'une quelconque des revendications précédentes, **caractérisé en ce que** chaque dispositif de verrouillage (90) est respectivement relié au moyen d'un câble Bowden (83, 84) à l'élément de déverrouillage associé (11, 12).

12. Siège de véhicule (1), comprenant un ensemble de déverrouillage (10) selon l'une quelconque des revendications précédentes.
